# EUROPEAN PATENT SPECIFICATION

(11) **EP 1 478 549 B1**
(45) Date of publication and mention of the grant of the patent: **21.03.2007**
(21) Application number: 03703571.4
(22) Date of filing: 30.01.2003
(51) Int. Cl.: B60R 3/02, B62D 25/22, B62D 29/04

(54) **FOLD-OUT EXTERIOR VEHICLE PART**
AUSFALTBARES FAHRZEUGAUSSENTEIL
PARTIE DE VEHICULE EXTERIEURE ESCAMOTABLE

(30) Priority: 22.02.2002 SE 0200519
(43) Date of publication of application: 24.11.2004
(73) Proprietor: Scania CV AB (publ), 151 87 Södertälje (SE)
(72) Inventor: LARSSON, Mikael, S-151 46 Södertälje (SE); SÖDERLUND, Jan, S-144 64 Rönninge (SE)
(74) Representative: Sjögren Paulsson, Stina
(86) International application number: PCT/SE2003/000150
(87) International publication number: WO 2003/070519

(56) References cited:
- EP-A1- 0 885 776
- DE-A1- 19 608 048
- US-A- 4 159 122
- DATABASE WPI Week 199832, Derwent Publications Ltd., London, GB; Class Q17, AN 1998-370743, XP002981134 & JP 10 147 194 A (NISSAN DIESEL KOGYO KK) 02 June 1998
- PATENT ABSTRACTS OF JAPAN vol. 17, no. 21 (M-1353) 14 January 1993 & JP 04 246 520 A (JAPAN STEEL WORKS LTD) 02 September 1992

## Description

### Technical field

The present invention relates to a fold-out exterior vehicle part intended to be subjected to stress.

### Background

In this patent application, exterior vehicle part means a vehicle part which is wholly or partly visible when the vehicle is viewed from outside.

Heavy vehicles, e.g. trucks, often have a driver's cab which incorporates a fold-out grille panel.

When the grille panel is in a retracted position, it serves as part of the bodywork. When the grille panel is in a folded-out position, a person can stand on the grille panel for better access for cleaning the vehicle's windscreen. When the flap is in a folded-out position, it is also possible to reach storage spaces or service points situated behind the flap.

An example of a grille panel for a vehicle is referred to in DE G 77 04 129.3 U1 which refers to a grille panel for a vehicle, which flap in a retracted position forms part of the bumper and in a folded-out position provides access to a spare wheel stored inside the flap, as well as enabling a person to stand on the flap to clean the vehicle's windscreen. The grille panel incorporates a bumper part, a loadbearing frame and a climbing step.

The problem with such grille panels is that they are at least largely made of metal such as, for example, aluminium which means that a grille panel with sufficient rigidity to be able to bear the weight of one or more persons will be heavy.

A reclaimable exterior vehicle body panel part with loadbearing support made of fibre-reinforced thermoplastic is known from WO 99/14101 A1.

A problem with such exterior body panel parts made of thermoplastic is that an exterior body panel part made of thermoplastic with sufficient rigidity to be able to bear the weight of one or more persons has to be provided with reinforcing ribs on the inside. A further problem is that in thermoplastic versions with reinforcing ribs the reinforcing ribs give rise to surface defects, i.e. visible depression marks, on the surface of the part arising from the moulding process, so thermoplastic as such does not result in a surface with sufficiently high-quality surface finish. This makes it necessary, as indicated in WO 99/14101 A1, to arrange a special surface layer in order to achieve sufficiently high-quality surface finish on thermoplastic versions with reinforcing ribs for such versions to be able to serve as exterior body panel parts.

Through EP 0 885 776 A1 a fold-out exterior vehicle part according to the preamble of claim 1 is known. Here, the foldable vehicle part can be made of either a plastic or metal material and it is intended, in a fold-up position, to act as a cover for an arrangement for fixing a tow cable. It can in a fold-out position also act as a support for a person standing on it.

For achieving sufficient strength for the cover to serve as a load bearing support it is provided with strengthening ribs or inserts. This arrangement is directed at solving the problems associated with off-road vehicles where the tow cable at times could come in contact with the fixed step positioned either below or above the attachment point for the tow cable when towing or winching on uneven ground. The vehicle part of EP 0 885 776 A1 suffers from the same drawbacks as that of WO 99/14101 A1 described above.

### Brief description of the invention

The problem that achieving sufficient rigidity for it to be possible for one or more persons to stand on the grille panel without the latter becoming appreciably deformed by stress means that the grille panel will be heavy if made of metal is solved according to the invention by arranging a fold-out external vehicle part, preferably a grille panel, which is intended to be subjected to stress and takes the form of a shell structure made of thermoset whose rigidity is such that the grille panel does not become appreciably deformed by stress.

The problem of surface defects on thermoplastic parts with reinforcing ribs is solved according to the invention by the features of claim 1, which accordingly, through the choice of thermoset as material, provides high-quality class A surface finish arising from the moulding process.

The fact that the fold-out exterior vehicle part incorporates the characteristics of claim 1 results in the advantage of providing a fold-out exterior vehicle part which is not only light in weight but also, owing to the rigidity of the thermoset, does not become appreciably deformed under stress, thereby making large weight savings of up to 50% possible as compared with flaps made of metal. A further result is the achievement of high-quality surface finish of the vehicle part.

### Brief list of the drawings

The invention will now be illustrated in more detail below with reference to the attached drawings, in which:
Figure 1 depicts schematically a view of a driver's cab for a heavy vehicle,
Figure 2 depicts schematically a view of a driver's cab for a heavy vehicle, according to Figure 1, with open grille panel, and
Figure 3 depicts schematically a view of a portion of a grille panel sectioned along the line III-III in Fig. 2.

### Description of preferred embodiments

The present invention relates to a fold-out external vehicle part intended to be subjected to stress. In this patent application, external vehicle part means a vehicle part which is wholly or partly visible when the vehicle is viewed from outside. In the preferred embodiment of the invention, the exterior vehicle part is a grille panel and the vehicle is a heavy truck.

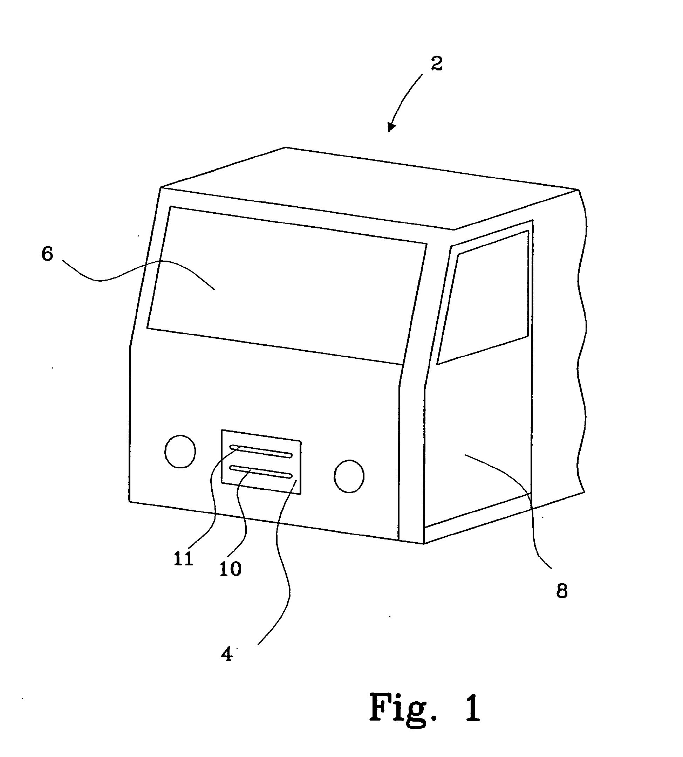

Figure 1 depicts schematically a view of a driver's cab 2 for a heavy vehicle, preferably a truck, whereby the driver's cab 2 comprises inter alia a fold-out grille panel 4, a windscreen 6, and two cab doors each arranged on their respective sides of the cab 2 (only one of them, the left cab door 8, is depicted). When the grille panel 4 is in a retracted position, it serves as part of the bodywork. The grille panel 4 may alternatively be provided with one or more passages 10, 11 running through it which are intended, for example, to let cooling air in to a radiator (not depicted) situated under the driver's cab.

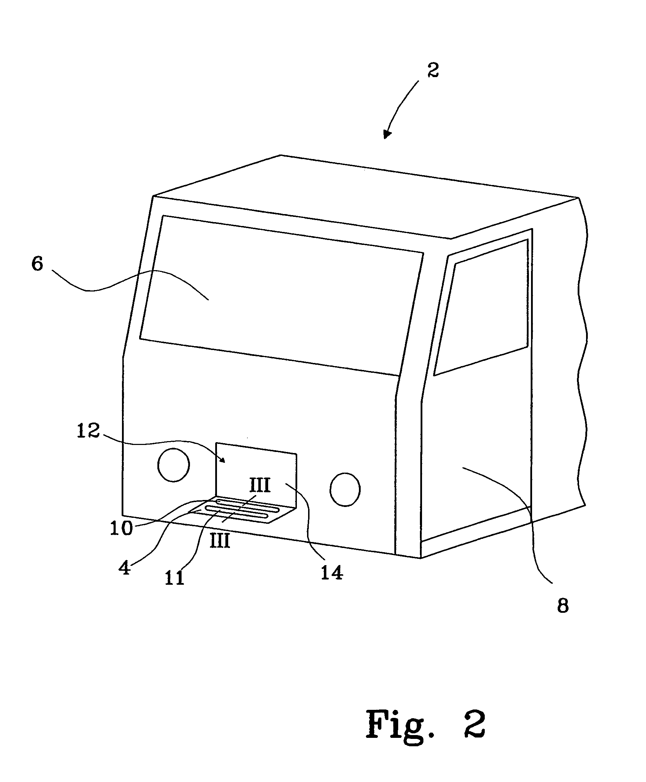

Figure 2 depicts schematically a view of a driver's cab 2 for a heavy vehicle, preferably a truck, according to figure 1, whereby the driver's cab 2 comprises inter alia a fold-out front panel 4, a windscreen 6, and two cab doors each arranged on their respective sides of the cab 2 (only one of them, the left cab door 8, is depicted). The drawing shows the grille panel 4 open, i.e. folded out. When the grille panel 4 is in an open (i.e. folded-out) position, at least one person can stand on the grille panel 4 for better access for cleaning the vehicle's upper front surface incorporating the vehicle's windscreen 6. It is also possible to have access to storage spaces 12 or service points 14, which are situated behind the grille panel 4 when the latter is in its closed position.

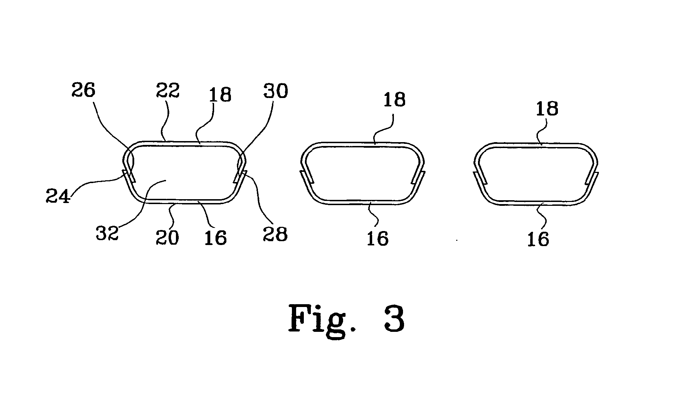

Figure 3 depicts schematically a sectional view of part of the grille panel 4 according to a first embodiment of the invention, sectioned along the line III-III in Fig. 2. The grille panel 4 is a shell structure comprising at least two shell portions 16, 18, which shell portions 16, 18 are manufactured separately. The drawing shows a shell structure made up of two shell portions 16, 18. Each of the shell portions 16, 18 has at least one substantially U-shaped cross-section as seen in at least one section through the grille panel 4. The drawing shows a grille panel 4 made up of two shell portions 16, 18 whereby each of the shell portions 16, 18 has three U-shaped cross-sections as seen in at least one section through the grille panel 4. Each U-shaped cross-section comprises a main portion 20, 22, a first side portion 24, 26 and a second side portion 28, 30. The two shell portions 16, 18 are so arranged that the first shell portion 16 is placed against the second shell portion 18 with the main portions 20, 22 of the U-shaped cross-section turned away from one another so that they abut against the U-shaped cross-sections of the two shell portions 16, 18 in pairs with respect to one another so that in each pair of U-shaped cross-sections the inner surface of the first side portion 24 of the first shell portion 16 at least partly abuts against the outer surface of the first side portion 26 of the second shell portion 18, while at the same time the inner surface of the second side portion 28 of the first shell portion 16 at least partly abuts against the outer surface of the second side portion 30 of the shell portion 18. This means that a hollow space 32 bounded by the two main portions 20, 22 and the four side portions 24, 26; 28, 30 abutting against one another in pairs is formed between the first shell portion 16 and the second shell portion 18 at each pair of U-shaped cross-sections. The shell portions 16, 18 are preferably joined together at their side portions 24, 26; 28, 30 by adhesive bonding. As illustrated in Figure 3, the surfaces of the aforesaid side portions 24, 26; 28, 30 which face in towards the centre of the U-shaped shell portions are designated as inner surfaces, while the surfaces of the aforesaid side portions 24, 26; 28, 30 which point outwards from the centre of the U-shaped shell portions are designated as outer surfaces.

In order to achieve a grille panel 4 with high-quality surface finish, i.e. of class A, without visible joints when the grille panel 4 is in its closed position, the shell portion 16 which has the inner surfaces of its side portions 24, 28 abutting against the outer surfaces of the side portions 26, 30 of the second shell portion 18, is facing towards the outside of the vehicle in the closed position of the grille panel 4, i.e. it is visible if the vehicle is viewed from outside when the grille panel 4 is closed.

Making the grille panel 4 of at least substantially thermoset makes it possible to manufacture a grille panel 4 which is complex in shape and rigid relative to its weight. This means that one or more persons can stand on the grille panel 4 without the latter becoming appreciably deformed due to stress, despite the grille panel 4 not being provided with reinforcements in the form of, for example, reinforcing ribs situated on the inside of the U-shaped shell portions 16, 18.

The fact that the shell portions 16, 18 need not be provided with reinforcing ribs makes it possible to produce grille panels 4 with high-quality surface finish, since surface defects due to the formation of reinforcing ribs during manufacture can be eliminated. The choice of thermoset thus means that a class A surface can be achieved during the moulding process.

The invention thus relates to a fold-out exterior vehicle part 4 intended to be subjected to stress, according to claim 1.

The invention also relates to a method for making a fold-out exterior vehicle part 4 intended to be subjected to stress, comprising the following steps:
- manufacture of at least a first shell portion 16 and a second shell portion 18 of the kind according to the invention and described in connection with Figure 3.
- application of adhesive to at least part of a surface of a side portion 24, 26; 28, 30 of a shell portion 16,18 intended to abut against another side portion 24, 26; 28, 30 of another shell portion 16, 18, and
- placing the first shell portion 16 against the second shell portion 18 with the main portions 20, 22 of the shell portions turned away from one another so that in each pair of U-shaped cross-sections of the first shell portion 16 and the second shell portion 18 the inner surface of the first side portion 24 of the first shell portion 16 partly abuts against the outer surface of the first portion 26 of the second shell portion 18, while at the same time the inner surface of the second side portion 28 of the first shell portion 16 partly abuts against the outer surface of the second side portion 30 of the second shell portion 18, so that a hollow space bounded by the two main portions 20, 22 and the four side portions 24, 26; 28, 30 abutting against one another in pairs is formed between the first shell portion 16 and the second shell portion 18 at each pair of U-shaped cross-sections of the first shell portion 16 and the second shell portion 18.

In the preferred embodiment of the invention, the exterior vehicle part is a grille panel and a vehicle is a heavy truck, i.e. a truck intended for heavy transport. It is also possible that the exterior vehicle part may be a climbing step. The vehicle may, for example, be a bus instead of a truck. The shell portions may be joined together in some other way than by adhesive bonding, e.g. by snap fasteners, riveting or threaded connections.

## Claims

1. A fold-out exterior vehicle part intended to be subjected to stress, **characterised in that** the vehicle part (4) is a shell structure made of thermoset which comprises at least two shell portions (16,18), wherein each of the at least two shell portions (16,18) has at least one substantially U-shaped cross-section as seen in at least one section through the vehicle part (4), whereby each U-shaped cross-section comprises a main portion (20,22), a first side portion (24,26) and a second side portion (28,30) and whereby at least two shell portions (16,18) are so arranged that the first shell portion (16) is placed against the second shell portion (18) with the main portions (20,22) of the U-shaped cross-sections turned away from one another so that the U-shaped cross-sections of the two shell portions (16,18) abut in pairs against one another in such a way that at each pair of U-shaped cross-sections the inner surface of the first side portion (24) of the first shell portion (16) at least partly abuts against the outer surface of the first side portion (26) of the second shell portion (18), while at the same time the inner surface of the second side portion (28) of the first shell portion (16) at least partly abuts against the outer surface of the second side portion (30) of the second shell portion (18), with the result that a hollow space (32) bounded by the two main portions (20,22) and the four side portions (24,26;28,30) abutting in pairs against one another is formed between the first shell portion (16) and the second shell portion (18) at each pair of U-shaped cross-sections of the first shell portion (16) and the second shell portion (18).

2. A fold-out exterior vehicle part according to claim 1, **characterised in that** the vehicle part is a fold-out grille panel (4) for a vehicle cab (2).

3. A fold-out exterior vehicle part according to claim 2, **characterised in that** the grille panel (4) is provided with at least one passage (10,11) running through it.

4. A fold-out exterior vehicle part according to claim 1, **characterised in that** the vehicle part is a grille panel (4) comprising two shell portions (16,18).

5. A fold-out exterior vehicle part according to claim 1 or 4, **characterised in that** the vehicle part (4) comprises two shell portions (16,18), each of them with three U-shaped cross-sections as seen in at least one section through the vehicle part (4).

6. A fold-out exterior vehicle part according to any one of claims 1 to 5, **characterised in that** the shell portions (16,18) are connected by adhesive bonding.

7. A method for making a fold-out exterior vehicle part intended to be subjected to stress, **characterised by** the following steps:
- manufacture of at least a first shell portion (16) and a second shell portion (18) whereby each of the two shell portions (16,18) has at least one substantially U-shaped cross-section as seen in at least one section through the front surface of the vehicle, whereby each U-shaped cross-section comprises a main portion (20,22), a first side portion (24,26) and a second side portion (28,30),
- application of adhesive to at least part of a surface of a side portion (24,26;28,30) of a shell portion (16, 18) intended to abut against another side portion (24, 26; 28, 30) of another shell portion (16, 18), and
- placing the first shell portions (16) against the second shell portion (18) with the main portions (20,22) of the U-shaped cross-sections turned away from one another so that the U-shaped cross-sections of the two shell portions (16,18) abut in pairs against one another so that at each pair of U-shaped cross-sections the inner surface of the first side portion (24) of the first shell portion (16) at least partly abuts against the outer surface of the first portion (26) of the second shell portion (18), while at the same time the inner surface of the second side portion (28) of the first shell portion (16) at least partly abuts against the outer surface of the second side portion (30) of the second shell portion (18).

8. A vehicle, **characterised by** incorporating a fold-out exterior vehicle part (4) according to any one of claims 1 to 6.

## Patentansprüche

1. Ausklappbares äußeres Fahrzeugteil, das Beanspruchung ausgesetzt werden soll,
**dadurch gekennzeichnet, dass** das Fahrzeugteil (4) als eine Schalenstruktur aus Duroplast ausgebildet ist, die wenigstens zwei Schalenabschnitte (16, 18) aufweist, wobei jeder der wenigstens zwei Schalenabschnitte (16, 18) wenigstens einen im Wesentlichen U-förmigen Querschnitt in wenigstens einem Schnitt durch das Fahrzeugteil (4) betrachtet aufweist, wobei jeder U-förmige Querschnitt einen Hauptabschnitt (20, 22), einen ersten Seitenabschnitt (24, 26) und einen zweiten Seitenabschnitt (28, 30) aufweist, und wobei wenigstens zwei Schalenabschnitte (16, 18) derart angeordnet sind, dass der erste Schalenabschnitt (16) gegenüber dem zweiten Schalenabschnitt (18) mit den Hauptabschnitten (20, 22) des U-förmigen Querschnitts voneinander abgewandt angeordnet ist, so dass die U-förmigen Querschnitte der beiden Schalenabschnitte (16, 18) paarweise derart aneinander anliegen, dass bei jedem Paar der U-förmigen Querschnitte die innere Oberfläche des ersten Seitenabschnitts (24) des ersten Schalenabschnitts (16) wenigstens teilweise an der äußeren Oberfläche des ersten Seitenabschnitts (26) des zweiten Schalenabschnitts (18) anliegt, während gleichzeitig die innere Oberfläche des zweiten Seitenabschnitts (28) des ersten Schalenabschnitts (16) wenigstens teilweise an der äußeren Oberfläche des zweiten Seitenabschnitts (30) des zweiten Schalenabschnitts (18) anliegt, mit dem Ergebnis, dass ein durch die beiden Hauptabschnitte (20, 22) und die vier Seitenabschnitte (24, 26; 28, 30), weiche paarweise aneinander anliegen, begrenzter Hohlraum (32), zwischen dem ersten Schalenabschnitt (16) und dem zweiten Schalenabschnitt (18) an jedem Paar von U-förmigen Querschnitten des ersten Schalenabschnitts (16) und des zweiten Schalenabschnitts (18) ausgebildet ist.

2. Ausklappbares äußeres Fahrzeugteil nach Anspruch 1,
**dadurch gekennzeichnet, dass** das Fahrzeugteil ein aufklappbarer Kühlergrill (4) für eine Fahrzeugkabine (2) ist.

3. Ausklappbares äußeres Fahrzeugteil nach Anspruch 2,
**dadurch gekennzeichnet, dass** der Kühlergrill (4) wenigstens einen Durchlass (10, 11) aufweist, der durch diesen verläuft.

4. Ausklappbares äußeres Fahrzeugteil nach Anspruch 1,
**dadurch gekennzeichnet, dass** das Fahrzeugteil ein Kühlergrill (4) ist, der zwei Schalenabschnitte (16, 18) aufweist.

5. Ausklappbares äußeres Fahrzeugteil nach Anspruch 1 oder 4,
**dadurch gekennzeichnet, dass** das Fahrzeugteil (4) zwei Schalenabschnitte (16, 18) aufweist, von denen jeder in wenigstens einem Schnitt durch das Fahrzeugteil (4) betrachtet mit drei U-förmigen Querschnitten ausgebildet ist.

6. Ausklappbares äußeres Fahrzeugteil nach einem der vorangegangenen Ansprüche,
**dadurch gekennzeichnet, dass** die Schalenabschnitte (16, 18) durch eine adhäsive Verbindung miteinander verbunden sind.

7. Verfahren zum Herstellen eines ausklappbaren äußeren Fahrzeugteils, das Beanspruchungen ausgesetzt werden soll, **gekennzeichnet durch** die folgenden Schritte:
- Herstellen von wenigstens einem ersten Schalenabschnitt (16) und einem zweiten Schalenabschnitt (18), wobei jeder von den zwei Schalenabschnitten (16, 18) wenigstens einen im Wesentlichen U-förmigen Querschnitt in wenigstens einem Schnitt durch die vorderseitige Oberfläche des Fahrzeugs betrachtet aufweist, wobei jeder U-förmige Querschnitt einen Hauptabschnitt (20, 22), einen ersten Seitenabschnitt (24, 26) und einen zweiten Seitenabschnitt (28, 30) aufweist,
- Anbringung eines Adhesivs (Klebstoffs) auf wenigstens einem Teil der Oberfläche eines Seitenabschnitts (24, 26; 28, 30) eines Schalenabschnitts (16, 18), das an einem weiteren Seitenabschnitt (24, 26; 28, 30) eines weiteren Schalenabschnitts (16, 18) anliegen soll, und
- Anordnung des ersten Schalenabschnitts (16) gegenüber dem zweiten Schalenabschnitt (18) mit den Hauptabschnitten (20, 22) der U-förmigen Querschnitte voneinander abgewandt, so dass die U-förmigen Querschnitte der beiden Schalenabschnitte (16, 18) paarweise aneinander anliegen, so dass bei jedem Paar der U-förmigen Querschnitte die innere Oberfläche des ersten Seitenabschnitts (24) des ersten Schalenabschnitts (16) wenigstens teilweise an der äußeren Oberfläche des ersten Abschnitt (26) des zweiten Schalenabschnitts (18) anliegt, während gleichzeitig die innere Oberfläche des zweiten Seltenabschnitts (28) des ersten Schalenabschnitts (16) wenigstens teilweise an der äußeren Oberfläche des zweiten Seitenabschnitts (30) des zweiten Schalenabschnitts (18) anliegt.

8. Fahrzeug, **dadurch gekennzeichnet, dass** es ein ausklappbares äußeres Fahrzeugteil (4) nach einem der Ansprüche 1 bis 6 umfasst.

## Revendications

1. Partie de véhicule extérieure escamotable destinée à être soumise à une contrainte, **caractérisée en ce que** la partie de véhicule (4) est une structure de coquille réalisée en matière plastique thermodurcissable, qui comprend au moins deux parties de coquille (16, 18), dans laquelle chacune de la au moins deux parties de coquille (16, 18) a au moins une section transversale sensiblement en forme de U, comme vu, dans au moins une section au travers de la partie de véhicule (4), de sorte que chaque section transversale en forme de U comporte une partie principale (20, 22), une première partie latérale (24, 26) et une deuxième partie latérale (28, 30) et de sorte qu'au moins deux parties de coquille (16, 18) sont agencées afin que la première partie de coquille (16) soit placée contre la deuxième partie de coquille (18), les parties principales (20, 22) des sections transversales en forme de U étant tournées à distance l'une de l'autre, de sorte que les sections transversales en forme de U des deux parties de coquille (16, 18) butent en paires l'une contre l'autre afin qu'à chaque paire des sections transversales en forme de U, la surface intérieure de la première partie latérale (24) de la première partie de coquille (16) bute au moins partiellement contre la surface extérieure de la première partie latérale (26) de la deuxième partie de coquille (18), tandis qu'en même temps la surface intérieure de la deuxième partie latérale (28) de la première partie de coquille (16) bute au moins partiellement contre la surface extérieure de la deuxième partie latérale (30) de la deuxième partie de coquille (18) avec le résultat qu'un espace creux (32) délimité par les deux parties principales (20, 22) et les quatre parties latérales (24, 26, 28, 30) butant en paires l'une contre l'autre est formé entre la première partie de coquille (16) et la deuxième partie de coquille (18) à chaque paire des sections transversales en forme de U de la première partie de coquille (16) et de la deuxième partie de coquille (18).

2. Partie de véhicule extérieure escamotable selon la revendication 1, **caractérisée en ce que** la partie de véhicule est un panneau à grille escamotable (4) pour une cabine de véhicule (2).

3. Partie de véhicule extérieure escamotable selon la revendication 2, **caractérisée en ce que** le panneau à grille (4) est muni d'au moins un passage (10, 11) le traversant.

4. Partie de véhicule extérieure escamotable selon la revendication 1, **caractérisée en ce que** la partie de véhicule est un panneau à grille (4) comprenant deux parties de coquille (16, 18).

5. Partie de véhicule extérieure escamotable selon la revendication 1 ou 4, **caractérisée en ce que** la partie de véhicule (4) comprend deux parties de coquille (16, 18), chacune d'elle avec trois sections transversales en forme de U, comme vu dans au moins une section au travers de la partie de véhicule (4).

6. Partie de véhicule extérieure escamotable selon l'une quelconque des revendications 1 à 5, **caractérisée en ce que** les parties de coquille (16, 18) sont reliées par une liaison adhésive.

7. Procédé de fabrication d'une partie de véhicule extérieure escamotable destinée à être soumise à une contrainte, **caractérisé par** les étapes suivantes :
- fabrication d'au moins une première partie de coquille (16) et d'une deuxième partie de coquille (18) de sorte que chacune des deux parties de coquille (16, 18) a au moins une section transversale sensiblement en forme de U, comme vu dans au moins une section au travers de la surface avant du véhicule, de sorte que chaque section transversale en forme de U comporte une partie principale (20, 22), une première partie latérale (24, 26) et une deuxième partie latérale (28, 30),
- application d'un adhésif sur au moins une partie d'une surface d'une partie latérale (24, 26 ; 28, 30) d'une partie de coquille (16, 18) destinée à buter contre une autre partie latérale (24, 26 ; 28, 30) d'une autre partie de coquille (16, 18) et
- mise en place des premières parties de coquille (16) contre la deuxième partie de coquille (18) avec les parties principales (20, 22) des sections transversales en forme de U tournées à distance l'une de l'autre, de sorte que les sections transversales en forme de U des deux parties de coquille (16, 18) butent en paires l'une contre l'autre afin qu'à chaque paire de sections transversales en forme de U, la surface intérieure de la première partie latérale (24) de la première partie de coquille (16) bute au moins en partie contre la surface extérieure de la première partie (26) de la deuxième partie de coquille (18), tandis qu'en même temps la surface intérieure de la deuxième partie latérale (28) de la première partie de coquille (16) bute au moins partiellement contre la surface extérieure de la deuxième partie latérale (30) de la deuxième partie de coquille (18).

8. Véhicule, **caractérisé en ce qu'**il comporte une partie de véhicule extérieure escamotable (4) selon l'une quelconque des revendications 1 à 6.
